(19) Europäisches Patentamt / European Patent Office / Office européen des brevets

(11) **EP 4 753 119 A1**

(12) **EUROPEAN PATENT APPLICATION**
published in accordance with Art. 153(4) EPC

(43) Date of publication:
03.06.2026 Bulletin 2026/23

(21) Application number: 23946387.0

(22) Date of filing: 12.10.2023

(51) International Patent Classification (IPC):
**H02K 3/40** (2006.01)

(52) Cooperative Patent Classification (CPC):
Y02E 10/72

(86) International application number:
**PCT/CN2023/124205**

(87) International publication number:
**WO 2025/020308 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.07.2023 CN 202310935110

(71) Applicant: **Beijing Goldwind Science & Creation
Windpower Equipment Co. Ltd.
Beijing 100176 (CN)**

(72) Inventor: **LI, Shulin
Beijing 100176 (CN)**

(74) Representative: **Hoffmann Eitle
Patent- und Rechtsanwälte PartmbB
Arabellastraße 30
81925 München (DE)**

(54) **STATOR, GENERATOR, WIND TURBINE GENERATOR SET, AND ANTI-CORONA TREATMENT METHOD**

(57) The present application discloses a stator, a generator, a wind turbine generator set, and an anti-corona treatment method. The stator comprises an iron core and a winding; a plurality of mounting slots are distributed at intervals in the iron core in the circumferential direction; the winding is arranged on the iron core, and the winding comprises a plurality of branches; each branch comprises a plurality of coils; each mounting slot is internally provided with one coil; each coil has end parts protruding out of the iron core on the two sides of the iron core in the axial direction; at least one branch is provided with a potting layer, and the potting layer covers the end parts of some of the plurality of coils of the branches; and the working voltage of some of the coils when the generator works at a rated voltage is greater than a voltage anti-corona threshold.

the coil having the anti-corona compensation requirement is selected from the plurality of coils of each branch, where the operating voltage of the coil having the anti-corona compensation requirement when the generator operates at the rated voltage is greater than the voltage anti-corona threshold — S1

the potting anti-corona treatment is performed on the end parts of the coils having the anti-corona compensation requirement — S2

**Fig. 4**

EP 4 753 119 A1

**Description**

**CROSS-REFERENCE TO RELATED APPLICATION**

The present application claims priority to Chinese Patent Application No. 202310935110.6, filed on July 27, 2023, entitled "STATOR, GENERATOR, WIND TURBINE GENERATOR SYSTEM, AND ANTI-CORONA TREATMENT METHOD", which is incorporated herein by reference in its entirety.

**TECHNICAL FIELD**

The present application relates to the technical field of generators, and particularly, to a stator, a generator, a wind turbine generator system, and an anti-corona treatment method.

**BACKGROUND**

At present, a generator with a rated voltage of up to 10 kV is often used in a wind turbine generator system (which may be referred to as a wind turbine or WTGS for short), and it may be considered that the rated voltage of the generator is increased to 35 kV. Even if the generator is directly integrated into a transformer station (changing from 35 kV to 110 kV/220 KV) of a wind farm after generating electricity, the number of transformers (the capacity of the transformer is equivalent to the capacity of the wind turbine, the transformer is expensive, and the price of the transformer often exceeds one million RMB) may be reduced, and the number of low/-medium-voltage high-current cables between the generator and the transformer may be reduced, further reducing costs and space.

The end parts of the coils of the stator of a high-voltage generator are in contact with the air, the potential of the conductor portions of the end parts of the coils is relatively high, there is electric field distortion caused by deformation, the strength of the electric field is relatively great, and the corona easily occurs. The anti-corona structure of the end parts of the coils of the stator of the existing high-voltage generator generally transitions using a low-resistance band and a high-resistance band. However, for an ultra-high-voltage generator (for example, 27 kV to 35 kV), the anti-corona design of the end parts of the coils cannot meet the anti-corona requirement.

**SUMMARY**

Embodiments of the present application provide a stator, a generator, a wind turbine generator system, and an anti-corona treatment method, and the stator can meet the anti-corona requirement for end parts of coils at a relatively high voltage level.

In a first aspect, embodiments of the present application provide a stator including: an iron core provided with a plurality of mounting grooves distributed at intervals in a circumferential direction of the iron core; a winding provided on the iron core and including a plurality of branches, each of the branches including a plurality of coils, the coils being provided in each of the mounting grooves, and the coils having end parts protruding from the iron core on two sides of the iron core along an axial direction, wherein at least one of the branches is provided with a potting layer wrapping the end parts of a part of the plurality of coils of the branch; and an operating voltage of the part of the plurality of coils when a generator operates at a rated voltage is greater than a voltage anti-corona threshold.

In a possible embodiment of the first aspect, the voltage anti-corona threshold is less than or equal to a maximum anti-corona voltage which the end parts of the coils are capable of withstanding based on an anti-corona structure thereof per se.

In a possible embodiment of the first aspect, the voltage anti-corona threshold is greater than 20 KV.

In a possible embodiment of the first aspect, for any one of the branches, the part of the plurality of coils include N consecutive ones of the coils starting from the one of the coils of the branch that is connected to a phase leading-out wire along a first clock direction, wherein the first clock direction includes one of a clockwise direction and an anticlockwise direction, N is determined by a ratio of a voltage range having an anti-corona compensation requirement to a voltage drop of a single-layer coil, and N is less than a total number of the coils of the branch.

In a possible embodiment of the first aspect, the voltage range having the anti-corona compensation requirement is determined by difference between the rated voltage of the generator and the voltage anti-corona threshold.

In a possible embodiment of the first aspect, each of the branches is provided with the potting layer.

In a possible embodiment of the first aspect, the plurality of coils of each of the branches are wound along a first clock direction in the circumferential direction, and one of the plurality of coils of each of the branches is connected to a phase leading-out wire; the potting layers corresponding to the branches each include a first potting part, the first potting part starts from the one of the coils of the branch connected to the phase leading-out wire and covers N consecutive ones of the coils along the first clock direction, N is less than a total number of the coils of the branch, and the first clock direction includes one of a clockwise direction and an anticlockwise direction.

In a possible embodiment of the first aspect, the potting layers corresponding to the branches each further include a second potting part, the second potting part starts from the one of the coils of the branch connected to the phase leading-out wire and covers at least one of the coils along a second clock direction, and the first clock direction is opposite to the second clock direction in the circumferential direction.

In a possible embodiment of the first aspect, one of the end parts of the coils is provided with a connecting lead, the coils of a same one of the branches are connected by the connecting lead, and the potting layer wraps the connecting lead.

In a possible embodiment of the first aspect, a slot opening of the mounting grooves is provided with a cover plate, the cover plate has an opening through which the end parts of the winding extend from the mounting grooves, and the potting layer partially covers and is connected to the cover plate.

In a possible embodiment of the first aspect, the potting layer extends beyond or is aligned with a yoke of the iron core along a radial outer side of the iron core; and/or the potting layer does not extend beyond or is aligned with teeth of the iron core along a radial inner side of the iron core.

In a possible embodiment of the first aspect, the potting layer includes epoxy resin, organic silicone resin, or polyurethane resin.

In a second aspect, embodiments of the present application provide a generator including the above stator.

In a third aspect, embodiments of the present application provide a wind turbine generator system including the above generator.

In a fourth aspect, embodiments of the present application provide an anti-corona treatment method for end parts of a stator of a generator, the stator including an iron core and a winding, the iron core being provided with a plurality of mounting grooves distributed at intervals in a circumferential direction of the iron core, the winding being provided on the iron core and including a plurality of branches, each of the branches including a plurality of coils, the coils being provided in each of the mounting grooves, and the coils having end parts protruding from the iron core on two sides of the iron core along an axial direction, and the anti-corona treatment method including: selecting a coil having an anti-corona compensation requirement from the plurality of coils of each of the branches, wherein an operating voltage of the coil having the anti-corona compensation requirement when the generator operates at a rated voltage is greater than a voltage anti-corona threshold; and performing a potting anti-corona treatment on end parts of the coil having the anti-corona compensation requirement.

In a possible embodiment of the fourth aspect, the voltage anti-corona threshold is less than or equal to a maximum anti-corona voltage which the end parts of the coils are capable of withstanding based on an anti-corona structure thereof per se.

In a possible embodiment of the fourth aspect, the voltage anti-corona threshold is greater than 20 KV.

In a possible embodiment of the fourth aspect, the plurality of coils of each of the branches are wound along a first clock direction in the circumferential direction, one of the plurality of coils of each of the branches is connected to a phase leading-out wire, and the first clock direction includes one of a clockwise direction and an anticlockwise direction; and the selecting a coil having an anti-corona compensation requirement from the plurality of coils of each of the branches includes: determining a voltage range having an anti-corona compensation requirement by difference between the rated voltage of the generator and the voltage anti-corona threshold; obtaining a number N of the coils having the anti-corona compensation requirement by calculating a ratio of the voltage range to a voltage drop of a single-layer coil; determining, for each of the branches, N consecutive ones of the coils starting from the one of the coils of the branch connected to a phase leading-out wire along the first clock direction as the coils of the branch having the anti-corona compensation requirement, where N is less than a total number of the coils of the branch.

In a possible embodiment of the fourth aspect, the selecting a coil having an anti-corona compensation requirement from the plurality of coils of each of the branches further includes: determining, for each of the branches, at least one of the coils starting from the one of the coils of the branch connected to the phase leading-out wire along a second clock direction as the coil of the branch having the anti-corona compensation requirement, wherein the first clock direction is opposite to the second clock direction in the circumferential direction.

In a possible embodiment of the fourth aspect, the voltage drop of the single-layer coil is determined by a ratio of a phase voltage of the generator to a total number of the coils of a single one of the branches.

In a possible embodiment of the fourth aspect, the voltage drop of the single-layer coil is determined by a ratio of a relative ground voltage of the generator to a total number of the coils of a single one of the branches.

As described above, based on the stator according to the embodiments of the present application, at least one of the branches is provided with the potting layer wrapping the end parts of the part of the plurality of coils of the branch, and the operating voltage of the part of the plurality of coils when the generator operates at the rated voltage is greater than the voltage anti-corona threshold, so that the part of the plurality of coils need to be capable of withstanding the relatively high voltage; by performing the potting anti-corona treatment on the end parts of the part of coils capable of withstanding the relatively high voltage, that is, by introducing the solid insulation filling layer outside the anti-corona structure of the coils, the air around the part of coils is eliminated, and the air ionization is avoided, so that the corona does not occur at the relatively high voltage level.

Further, based on the anti-corona treatment method for the end parts of the stator of the generator according to the embodiments of the present application, any treatment does not need to be performed on the end parts of the coils capable of withstanding the low voltage, but the anti-corona arrangement with the low resistance and the high resistance is added based on the low-resistance bands of the end parts of the coils, which is simpler, easier, and more effective, and reduces the amount of the material used and reduces costs.

## BRIEF DESCRIPTION OF THE DRAWINGS

The present application will be better understood from the following description of specific embodiments of the present application in conjunction with the drawings. The same or similar reference numerals represent the same or similar features.

Fig. 1 is a schematic structural view of a stator of a generator in the related art;
Fig. 2 is a schematic structural view of an iron core shown in Fig. 1;
Fig. 3 is an equivalent circuit diagram of a winding of a stator of a generator;
Fig. 4 is a flow chart of an anti-corona treatment method for end parts of a stator of a generator according to an embodiment of the present application;
Fig. 5 is a flow chart of an anti-corona treatment method for end parts of a stator of a generator according to another embodiment of the present application;
Fig. 6 is a schematic structural view of a stator of a generator according to an embodiment of the present application; and
Fig. 7 is a flow chart of an anti-corona treatment method for end parts of a stator of a generator according to yet another embodiment of the present application.

Reference Numerals:

100: Stator; 10: Iron core; 11: Mounting groove; 20: Winding; 21: Coil;
22 (22a, 22b, 22c): Phase leading-out wire; 23 (23a, 23b, 23c): Potting layer;
231a: First potting part; 232a: Second potting part.

## DETAILED DESCRIPTION

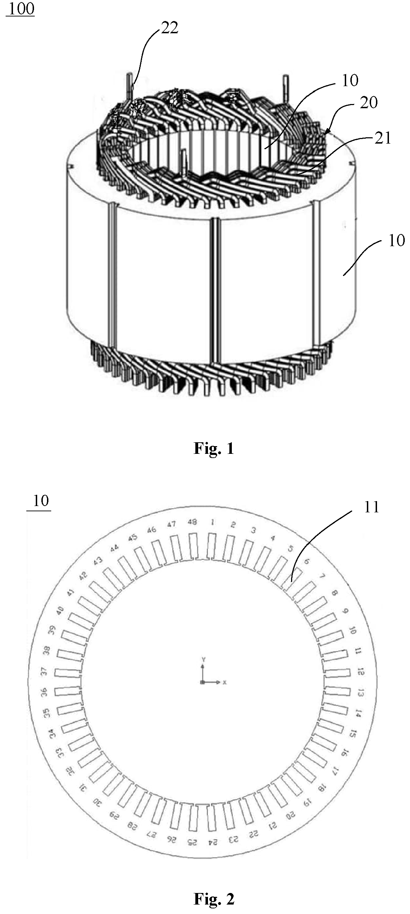

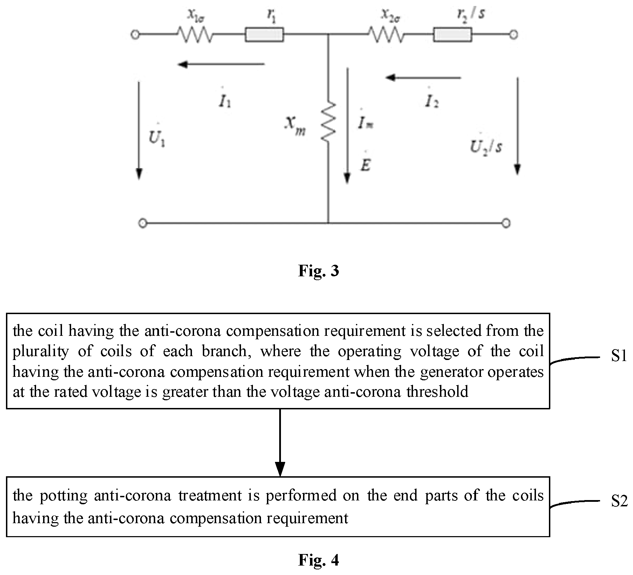

Features and exemplary embodiments of various aspects of the present application will be described in detail below. In the following detailed description, numerous specific details are set forth in order to provide a thorough understanding of the present application.
As shown in Fig. 1 and Fig. 2, the stator 100 of the high-voltage generator includes the iron core 10 and the winding 20. The iron core 10 is provided with a plurality of mounting grooves 11 distributed at intervals in the circumferential direction of the iron core 10, the winding 20 is provided on the iron core 10, the winding 20 includes a plurality of branches, and each branch includes a plurality of coils 21.
The winding 20 of a three-phase generator includes three branches, and each branch corresponds to one phase. The iron core 10 shown in Fig. 2 has 48 mounting grooves 11, and the number of the coils 21 per branch per phase is 16. The coils are provided in each mounting groove 11, and the coils have the end parts protruding from the iron core 10 on two sides of the iron core 10 along the axial direction.
Since the end parts of the coils protrude from the iron core 10 and are in contact with the air, the potential of the conductor portions of the end parts of the coils is relatively high, there is electric field distortion caused by deformation, and the corona easily occurs. Currently, the end parts of the coils of the stator of the high-voltage generator stator generally adopts an anti-corona structure with a transition between low-resistance band and high-resistance band.
However, there is an upper limit to the resistivity of the high-resistance band, and the existing anti-corona design alone cannot meet the anti-corona requirements for the end parts of the coils of the generator at ultra-high voltage (27kV-35kV).
In order to solve the anti-corona problem of the end parts of the coils of the high-voltage generator, the inventor has studied the equivalent circuit diagram (referring to Fig. 3) of the winding of the stator and obtained the basic equation of the wind turbine generator:

$$\begin{cases} \dot{U}_1 = \dot{E} - \dot{I}_1(r_1 + jx_{1\sigma}) \\ \dfrac{\dot{U}_2}{s} = \dot{I}_2\left(\dfrac{r_1}{s} + jx_{2\sigma}\right) + \dot{E} \\ \dot{E} = jx_m\dot{I}_m \\ \dot{I}_2 = \dot{I}_1 + \dot{I}_m \end{cases},$$

where $\dot{U}_1$ and $\dot{U}_2$ are the stator voltage phasor and the rotor voltage phasor, respectively; $\dot{E}$ is the air-gap magnetic field induced electromotive force phasor; $\dot{I}_1$, $\dot{I}_2$, and $\dot{I}_m$ are the stator current phasor, the rotor current phasor, and the excitation current phasor, respectively; r1 is the stator resistance; $x_{1\sigma}$, $x_{2\sigma}$, and $x_m$ are the stator leakage reactance, the rotor leakage reactance, and the excitation reactance; s represents the slip, and j is a complex number, where a positive j indicates that the voltage phasor leads by 90 degrees, and a negative j indicates that the voltage phasor lags by 90 degrees.
It may be seen from the above equation that, under a condition that the magnitude of the stator voltage U1 is constant, the magnitude of the potential of the coil group is related to the stator resistance r1 (e.g. stator winding resistance) and the stator leakage reactance, so that the potential is the highest at the position of the phase leading-out wire and then is gradually decreased based on the potential of the coils to the ground. That is, in the operating state of the generator, the operating voltages which the coils are capable of withstanding are different from each other, and the closer to the position of the phase leading-out wire, the greater the operating voltages which the coils are capable of withstanding, and the farther away from the position of the phase leading-out wire, the smaller the operating voltages which the coils are capable of withstanding. Here, the phase leading-out wire refers to the leading-out wire of each phase of the generator.

At present, the mainstream anti-corona structure with the high-resistance band and the low-resistance band in the industry may better treat and solve the rated voltage that reaches the level of 24 kV-27 kV (mainly used for hydro-thermal power and nuclear power). For the level decreasing from 35 kV to 24 kV-27 kV, the number of the coils needed for this level, that is, the number of the coils capable of withstanding the voltage of this level, may be easily calculated. For the part of coils, an additional anti-corona treatment may be carried out outside the mainstream anti-corona structure to meet the anti-corona requirement at the relatively high voltage.

Based on this, embodiments of the present application provide an anti-corona treatment method for end parts of a stator of a generator, which can meet the anti-corona requirement for the end parts of the coils of the generator at the relatively high voltage.

As shown in Fig. 4, the anti-corona treatment method for the end parts of the stator of the generator according to an embodiment of the present application includes step S1 and step S2.

In S1, the coil having the anti-corona compensation requirement is selected from the plurality of coils of each branch, where the operating voltage of the coil having the anti-corona compensation requirement when the generator operates at the rated voltage is greater than the voltage anti-corona threshold.

The voltage anti-corona threshold may be less than or equal to the maximum anti-corona voltage which the end parts of the coil are capable of withstanding based on the anti-corona structure thereof per se. The anti-corona structure of the end parts of the coil refers to the mainstream anti-corona structure with the high-resistance band and the low-resistance band in the industry.

In the embodiments of the present application, the voltage anti-corona threshold may be obtained by actual measurement, or a pre-set value. For example, the voltage anti-corona threshold is greater than 20 KV. With the increase of the resistivity of the high-resistance band or the improvement of the anti-corona structure, the voltage anti-corona threshold may be 24 KV and 27 KV, which is not limited herein.

Since the operating voltages which the coils are capable of withstanding are different from each other when the generator operates, based on the anti-corona structure of the end parts of the coils, a part of coils that are relatively far from the position of the phase leading-out wire and capable of withstanding the relatively small operating voltages do not have the corona problem, and the part of coils may remain untreated.

However, for a part of coils that are relatively close to the position of the phase leading-out wire and capable of withstanding the relatively great operating voltages, it is necessary to consider whether the operating voltages of the part of coils are greater than the voltage anti-corona threshold. If the operating voltages of the part of coils are greater than the voltage anti-corona threshold, it indicates that the corona problem still cannot be avoided based on the anti-corona structure of the end parts of the coils. Therefore, the part of coils need additional anti-corona treatment, and the part of coils having the anti-corona compensation requirement need to be selected first.

In S2, the potting anti-corona treatment is performed on the end parts of the coils having the anti-corona compensation requirement.

By the potting anti-corona treatment, the solid insulation filling layer can be introduced outside the anti-corona structure of the coils, so that the resistivity of the insulation layer outside the coils can be increased, the small gaps outside the coils can be eliminated, the air can be completely insulated, and the corona problem will not occur.

As described above, based on the anti-corona treatment method for the end parts of the stator of the generator according to the embodiments of the present application, first, the coil having the anti-corona compensation requirement is selected from the plurality of coils of each branch, that is, the coil having the operating voltage greater than the voltage anti-corona threshold when the generator operates at the rated voltage is selected, and then the potting anti-corona treatment is performed on the end parts of the part of coils capable of withstanding the relatively high voltage, that is, the solid insulation filling layer is introduced outside the anti-corona structure of the coils, so that the anti-corona capacity of the coils can be further improved.

Further, based on the anti-corona treatment method for the end parts of the stator of the generator according to the embodiments of the present application, any treatment does not need to be performed on the end parts of the coils capable of withstanding the low-voltage, but the anti-corona arrangement with the low resistance and the high resistance is added based on the low-resistance bands of the end parts of the coils, which is simple, easy, and effective, and reduces the amount of the material used and reduces costs.

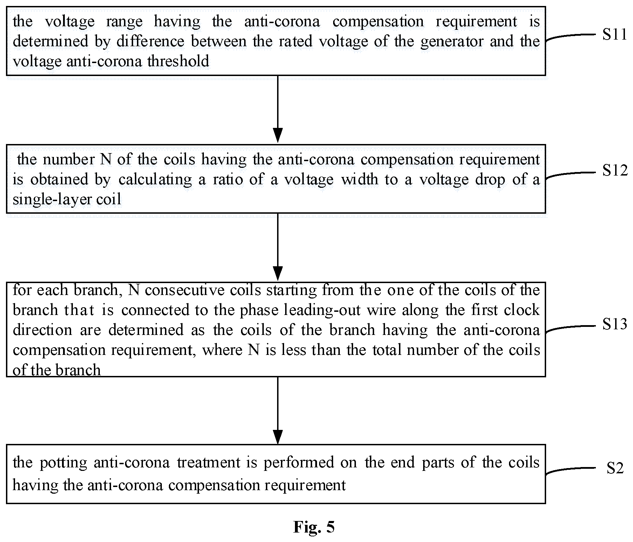

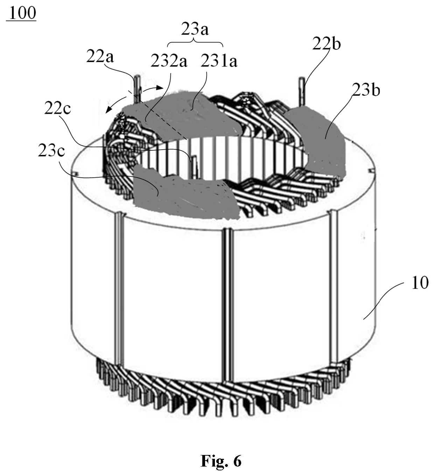

Referring to Fig. 5 and Fig. 6, the anti-corona treatment method for the end parts of the stator of the generator according to the embodiments of the present application is described in detail.

As shown in Fig. 5, step S1 may include the following sub-steps S11 to S13.

In S11, the voltage range having the anti-corona compensation requirement is determined by difference between the rated voltage of the generator and the voltage anti-corona threshold.

In S12, the number N of the coils having the anti-corona compensation requirement is obtained by calculating a ratio of a voltage range to a voltage drop of a single-layer coil.

The voltage drop of the single-layer coil can be determined by the ratio of the phase voltage of the generator to the total number of the coils of the single branch, or may be determined by the ratio of the voltage of the generator relative to the ground to the total number of the coils of the single branch.

Generally, the number of the mounting grooves of high voltage generators used in the field of wind power generation is greater than 70. Taking 72 grooves as an example, the number of the coils per branch per phase is 24. Assuming that the rated voltage of the generator is 35kv, the voltage relative to the ground is 35/1.732 = 20.2 kV, then the voltage drop of each coil should be 20.2/24 = 0.84 kV; While calculated on a phase-to-phase basis, the maximum phase-to-phase voltage is 35 kV, and the voltage drop of each coil should be 35/24 = 1.46 kV.

Taking the voltage drop of the single-layer coil obtained by the phase-to-phase calculation as a reference, the voltage anti-corona threshold is set to be 27 KV, then the voltage range having the anti-corona compensation requirement is calculated to be 35 - 27 = 8 KV, and the number of the coils having the anti-corona compensation requirement is calculated to be 8/1.46 = 5.5; and the voltage anti-corona threshold is set to be 24 KV, then the voltage range having the anti-corona compensation requirement is calculated to be 35 - 24 = 11 KV, and the number of the coils having the anti-corona compensation requirement is calculated to be 11/1.46 = 7.5. In order to improve the safety margin, N may be equal to 8.

In S13, for each branch, N consecutive coils starting from the one of the coils of the branch connected to the phase leading-out wire along the first clock direction are determined as the coils of the branch having the anti-corona compensation requirement, where N is less than the total number of the coils of the branch.

The plurality of coils of each branch are wound along the first clock direction in the circumferential direction, the first clock direction includes one of the clockwise direction and the anticlockwise direction, and the winding direction (the first clock direction) shown in Fig. 6 is the clockwise direction.

One of the plurality of coils of each branch is connected to the phase leading-out wire, and the phase leading-out wire 22a of the a-phase branch, the phase leading-out wire 22b of the b-phase branch, and the phase leading-out wire 22c of the c-phase branch are shown in Fig. 6.

For each branch, the potential of the position of the phase leading-out wire is the highest. Assuming that the position of the phase leading-out wire is the first coil of the branch and the potential is decreased along the winding direction, then, taking Fig. 6 as an example, for the a-phase branch, 8 coils extending from the position of the phase leading-out wire 22a along the clockwise direction may be used as the coils having the anti-corona compensation requirement, and then the 8 coils are potted to form the potting layer 23a; for the b-phase branch, 8 coils extending from the position of the phase leading-out wire 22b along the clockwise direction may be used as the coils having the anti-corona compensation requirement, and then the 8 coils are potted to form the potting layer 23b; for the c-phase branch, 8 coils extending from the position of the phase leading-out wire 22c along the clockwise direction may be used as the coils having the anti-corona compensation requirement, and then the 8 coils are potted to form the potting layer 23c.

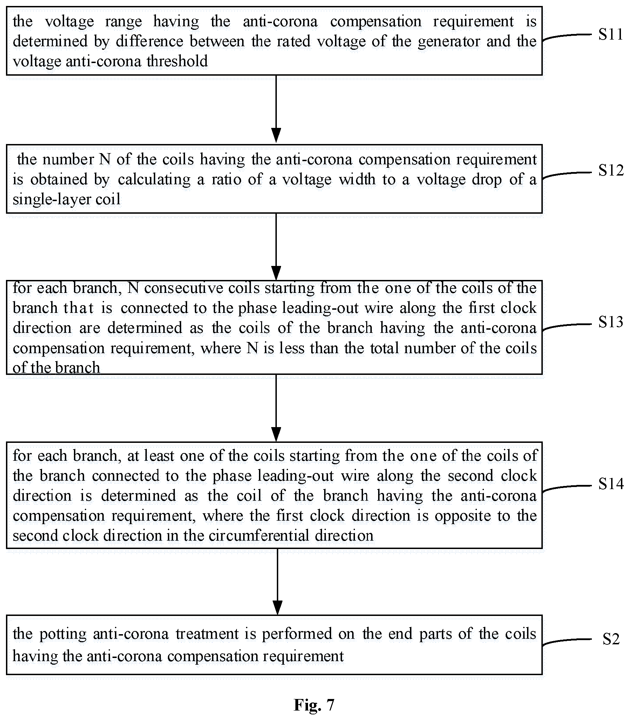

In some optional embodiments, as shown in Fig. 7, step S1 may further include substep S14.

In S14, for each branch, at least one of the coils starting from the one of the coils of the branch connected to the phase leading-out wire along the second clock direction is determined as the coil of the branch having the anti-corona compensation requirement, where the first clock direction is opposite to the second clock direction in the circumferential direction.

In this step, the second clock direction may be understood to be the direction opposite to the winding direction.

Referring to Fig. 6, for the a-phase branch, the potential of the position of the phase leading-out wire 22a is the highest, and for the first coil adjacent along the anticlockwise direction, which belongs to the c-phase branch, however, since this coil is immediately adjacent to the phase leading-out wire 22a, it is easily affected by the high potential of the phase leading-out wire 22a and subjected to the relatively high voltage. Therefore, at least one coil along the direction opposite to the winding direction can be determined as the coil having the anti-corona compensation requirement in the branch, the potting treatment is performed on the part of coils subjected to the relatively high voltage, and the solid insulation filling layer is introduced outside the anti-corona structure of the part of coils, so that the anti-corona capacity of the part of coils is further improved.

In some optional embodiments, starting from the position of the phase leading-out wire, 8 coils along the winding direction (the clockwise direction in Fig. 6) and 1 coil along the direction opposite to the winding direction (the anticlockwise direction in Fig. 6), 9 coils in total in the single phase, can be potted and cast, then the number of coils in three phases that need to be potted and cast is 27 in total.

In some optional embodiments, starting from the position of the phase leading-out wire, 8 coils along the winding direction (the clockwise direction in Fig. 6) and 2 coils along the direction opposite to the winding direction (the anticlockwise direction in Fig. 6), 10 coils in total in the single phase, can be potted and cast, then the number of coils in three phases that need to be potted and cast is 30 in total.

Embodiments of the present application further provide a stator 100. Referring to Fig. 6 for the structure of the stator 100, the stator 100 includes the iron core 10 and the winding 20, the iron core 10 is provided with a plurality of mounting grooves 11 distributed at intervals in the circumferential direction of the iron core 10, the winding 20 is provided on the iron core 10 and includes a plurality of branches, each branch includes a plurality of coils 21, the coils are provided in each mounting groove 11, and the coils 21 have end parts protruding from the iron core 10 on two sides of the iron core 10 along the axial direction; at least one branch is provided with the potting layer 23 wrapping the end parts of a part of the plurality of coils 21 of the branch, where the operating voltage of the part of the plurality of coils 21 when the generator operates at the rated voltage is greater than the voltage anti-corona threshold.

In some optional embodiments, the part of the plurality of coils include N consecutive coils starting from the one of the coils of the branch connected to the phase leading-out wire along the first clock direction, where the first clock direction includes one of the clockwise direction and the anticlockwise direction, N is determined by the ratio of the voltage range having the anti-corona compensation requirement to the voltage drop of the single-layer coil, and N is less than the total number of the coils of the branch.

In some optional embodiments, the voltage range having the anti-corona compensation requirement is determined by difference between the rated voltage of the generator and the voltage anti-corona threshold.

In some optional embodiments, each branch is provided with the potting layer 23.

In some optional embodiments, the plurality of coils of each branch are wound along the first clock direction in the circumferential direction, and one of the plurality of coils of each branch is connected to the phase leading-out wire; the potting layers 23 corresponding to the branches each include the first potting part 231a, the first potting part 231a starts from the one of the coils of the branch connected to the phase leading-out wire and covers N consecutive coils along the first clock direction, N is less than the total number of the coils of the branch, and the first clock direction includes one of the clockwise direction and the anticlockwise direction.

In some optional embodiments, the potting layers 23 corresponding to the branches each further include the second potting part 232a, the second potting part 232a starts from the one of the coils of the branch that is connected to the phase leading-out wire and covers at least one coil 21 along the second clock direction, and the first clock direction is opposite to the second clock direction in the circumferential direction.

In some optional embodiments, one of the end parts of the coils is provided with the connecting lead, the coils of the same branch are connected by the connecting lead, and the potting wraps the connecting lead.

In some optional embodiments, the slot opening of the mounting grooves 11 is provided with the cover plate, the cover plate has the opening through which the end parts of the winding 20 extend from the mounting grooves 11, and the potting layer 23 partially covers and is connected to the cover plate.

In optional embodiments, the potting layer 23 extends beyond or is aligned with the yoke of the iron core 10 along the radial outer side of the iron core 10; and/or, the potting layer 23 does not extend beyond or is aligned with the teeth of the iron core 10 along the radial inner side of the iron core 10.

The resin for potting may include the organic silicone resin, the epoxy resin, the polyurethane resin, and the like.

Common potting methods for the end parts of the generator mainly include the end-port potting and the end integral potting.

The position of the end-port potting is a small portion out of the slots of the iron core which range from about 10 mm to 50 mm in height.

The position of the end integral potting is the entire end parts along the axial direction. For example, some submarine motors, nuclear submarine motors, ship motors, underwater or under-sea motors have the sealing requirement which often is the sealing treatment such as casting or potting.

Unlike the end-port potting or the end integral potting, the segmented potting in the circumferential direction of the end parts of the stator is provided in the present application, mainly aiming at a part of coils capable of withstanding the relatively high voltage in the generator with the relatively high voltage level, such as the generator with the voltage of 24 kv to 27 KV or more, even 35 kV or more. The wind turbine is generally in the range from 1 MW to 20 MW, and a generator system with the single-unit capacity of the voltage of 20 MW or more may be developed in the future.

The benefits of the segmented potting include the following.

    (1) the potting anti-corona treatment is performed on the coils at the position with the relatively high voltage exceeding the voltage anti-corona threshold, so that the corona does not occur; and for the coils at the position with the relatively high voltage lower than the voltage anti-corona threshold, the mature mode at the present stage is used, that is, the arrangement of the anti-corona layer with the high-resistance band and the low-resistance band, which is simple, easy, and effective, and reduces the amount of the material used and reduces costs;

    (2) under a condition that the end parts are all potted, for a stator having an iron core outer diameter of 2 meter, the amount of the potting resin used in two end parts is expected to exceed 1 ton, the whole generator is generally 15 to 18 ton, the amount of the potting resin used is almost 5% to 7% of the weight of the whole generator, and after the segmented potting, the potting area is only 37.5% of the original area, then the weight may be reduced, which is expected to be less than 0.4 ton; and the weight of the potting area is reduced to 2% to 3% of the total weight of the generator, which is beneficial for the load design of the whole generator.

(3) under a condition that the end parts are all potted, the cooling of the end parts is difficult, and the ventilation is insufficient, so that the heating of the end parts is serious, the temperature of the whole generator is relatively high, or the copper current density needs to be selected to be very low; the heat exchange efficiency of the gas is much higher than that of organic materials, so that the heat of the generator can be better dissipated in the segmented potting, serving the function of improving the heat dissipation capacity. Embodiments of the present application further provide a generator including the above stator.

Embodiments of the present application further provide a wind turbine generator system including the above generator.

It should be noted that, the embodiments in the specification are described in a progressive manner, the same and similar parts of the embodiments may be referred to each other, and each embodiment focuses on differences from other embodiments. For apparatus embodiments, reference is made to the description of the method embodiments for the related parts. The embodiments of the present application are not limited to the particular steps and structures described above and shown in the drawings. Those skilled in the art may make various changes, modifications, and additions, or change the order of the steps after understanding the gist of the embodiments of the present application. Also, for the sake of brevity, the detailed description of known methods and technologies is omitted here.

The functional blocks shown in the structural block diagrams may be implemented as hardware, software, firmware, or a combination thereof. When implemented as hardware, it may be, for example, an electronic circuit, an application specific integrated circuit (ASIC), suitable firmware, a plug-in, a functional card, and the like. When implemented as software, elements of the embodiments of the present application are programs or code segments for performing required tasks. The program or code segment may be stored in a machine-readable medium or transmitted by a data signal carried in a carrier wave over a transmission medium or communication link. The "machine-readable medium" may include any medium capable of storing or transmitting information. An example of the machine-readable medium includes an electronic circuit, a semiconductor memory device, a ROM, a flash memory, an erasable ROM (EROM), a floppy disk, a CD-ROM, an optical disk, a hard disk, a fiber optic medium, a radio frequency (RF) link, and the like. The code segment may be downloaded via a computer network such as the internet and the intranet.

The embodiments of the present application may be implemented in other specific forms without departing from the gist and essential characteristics thereof. For example, the algorithms described in particular embodiments may be modified, and the system architecture does not depart from the basic gist of the embodiments of the present application. Accordingly, these embodiments are to be seen as examples but not limitations in all respects, the scope of the embodiments of the present application is defined by the appended claims rather than the above description, and all changes falling within the meaning of the claims and the scope of the equivalents thereof are thus included in the scope of the embodiments of the present application.

**Claims**

1. A stator (100) comprising:

   an iron core (10) provided with a plurality of mounting grooves (11) distributed at intervals in a circumferential direction of the iron core (10); a winding (20) provided on the iron core (10) and comprising a plurality of branches, each of the branches comprising a plurality of coils (21), the coils (21) being provided in the mounting grooves (11) respectively, and the coils (21) having end parts protruding from the two sides of the iron core (10) along an axial direction, wherein at least one of the branches is provided with a potting layer (23) wrapping the end parts of some of the coils (21) of the branch; and an operating voltage of the some of the coils (21) when a generator operates at a rated voltage is greater than a voltage anti-corona threshold.

2. The stator (100) according to claim 1, wherein the voltage anti-corona threshold is less than or equal to a maximum anti-corona voltage which the end parts of the coils (21) are capable of withstanding based on an anti-corona structure thereof per se.

3. The stator (100) according to claim 1, wherein the voltage anti-corona threshold is greater than 20 KV.

4. The stator (100) according to claim 1, wherein for any one of the branches, the some coils (21) comprise N consecutive ones of the coils starting from the one of the coils of the branch that is connected to a phase leading-out wire along a first clock direction, wherein the first clock direction comprises one of a clockwise direction and an anticlockwise direction, N is determined by a ratio of a voltage range having an anti-corona compensation requirement to a voltage drop of a single-layer coil, and N is less than a total number of the coils of the branch.

5. The stator (100) according to claim 4, wherein the voltage range having the anti-corona compensation requirement is determined by difference between the rated voltage of the generator and the voltage anti-corona threshold.

6. The stator (100) according to claim 1, wherein each of the branches is provided with the potting layer (23).

7. The stator (100) according to claim 1, wherein the plurality of coils (21) of each of the branches are wound along a first clock direction in the circumferential direction, and one of the plurality of coils (21) of each of the branches is connected to a phase leading-out wire (22);

   the potting layers (23) corresponding to the branches each comprise a first potting part (231a), and the first potting part (231a) starts from the one of the coils (21) of the branch connected to the phase leading-out wire (22) and covers N consecutive ones of the coils (21) along the first clock direction, where N is less than a total number of the coils (21) of the branch, and the first clock direction comprises one of a clockwise direction and an anticlockwise direction.

8. The stator (100) according to claim 7, wherein the potting layers (23) corresponding to the branches each further comprise a second potting part (232a), and the second potting part (232a) starts from the one of the coils (21) of the branch connected to the phase leading-out wire (22) and covers at least one of the coils (21) along a second clock direction, where the first clock direction is opposite to the second clock direction in the circumferential direction.

9. The stator (100) according to claim 1, wherein at least one of the end parts of the coils (21) is provided with a connecting lead, the coils (21) of a same one of the branches are connected by the connecting lead, and the potting layer (23) wraps the connecting lead.

10. The stator (100) according to claim 1, wherein a slot opening of the mounting grooves (11) is provided with a cover plate, the cover plate has an opening through which the end parts of the winding extend from the mounting grooves (11), and the potting layer (23) partially covers and is connected to the cover plate.

11. The stator (100) according to claim 1, wherein

   the potting layer (23) extends beyond or is aligned with a yoke of the iron core (10) along a radial outer side of the iron core (10); and/or the potting layer (23) does not extend beyond or is aligned with teeth of the iron core (10) along a radial inner side of the iron core (10).

12. The stator (100) according to claim 1, wherein the potting layer (23) comprises epoxy resin, organic silicone resin, or polyurethane resin.

13. A generator comprising the stator (100) according to any one of claims 1 to 12.

14. A wind turbine generator system comprising a generator according to claim 13.

15. An anti-corona treatment method for end parts of a stator of a generator, the stator (100) comprising an iron core (10) and a winding (20), the iron core (10) being provided with a plurality of mounting grooves (11) distributed at intervals in a circumferential direction of the iron core (10), the winding (20) being provided on the iron core (10) and comprising a plurality of branches, each of the branches comprising a plurality of coils (21), the coils (21) being provided in the mounting grooves (11) respectively, and the coils (21) having end parts protruding from the two sides of the iron core (10) along an axial direction, and the anti-corona treatment method comprising:

   selecting a coil having an anti-corona compensation requirement from the plurality of coils of each of the branches, where an operating voltage of the coil having the anti-corona compensation requirement when the generator operates at a rated voltage is greater than a voltage anti-corona threshold; and
   performing a potting anti-corona treatment on the end parts of the coil having the anti-corona compensation requirement.

16. The anti-corona treatment method according to claim 15, wherein the voltage anti-corona threshold is less than or equal to a maximum anti-corona voltage which the end parts of the coil are capable of withstanding based on an anti-corona structure thereof per se.

17. The anti-corona treatment method according to claim 15, wherein the voltage anti-corona threshold is greater than 20 KV.

18. The anti-corona treatment method according to claim 15, wherein the plurality of coils of each of the branches are wound along a first clock direction in the circumferential direction, one of the plurality of coils of each of the branches is connected to a phase leading-out wire, and the first clock direction comprises one of a clockwise direction and an anticlockwise direction; and
   the selecting a coil having an anti-corona compensation requirement from the plurality of coils of each of the branches comprises:

determining a voltage range having an anti-corona compensation requirement by difference between the rated voltage of the generator and the voltage anti-corona threshold;

obtaining a number N of the coils having the anti-corona compensation requirement by calculating a ratio of the voltage range to a voltage drop of a single-layer coil;

determining, for each of the branches, N consecutive ones of the coils starting from the one of the coils of the branch connected to a phase leading-out wire along the first clock direction as the coils of the branch having the anti-corona compensation requirement, where N is less than a total number of the coils of the branch.

19. The anti-corona treatment method according to claim 18, wherein the selecting a coil having an anti-corona compensation requirement from the plurality of coils of each of the branches further comprises:

determining, for each of the branches, at least one of the coils starting from the one of the coils of the branch connected to the phase leading-out wire along a second clock direction as the coil of the branch having the anti-corona compensation requirement, wherein the first clock direction is opposite to the second clock direction in the circumferential direction.

20. The anti-corona treatment method according to claim 18, wherein the voltage drop of the single-layer coil is determined by a ratio of a phase voltage of the generator to a total number of the coils of a single one of the branches, or a ratio of a relative ground voltage of the generator to a total number of the coils of a single one of the branches.

**Fig. 1**

**Fig. 2**

**Fig. 3**

the coil having the anti-corona compensation requirement is selected from the plurality of coils of each branch, where the operating voltage of the coil having the anti-corona compensation requirement when the generator operates at the rated voltage is greater than the voltage anti-corona threshold — S1

the potting anti-corona treatment is performed on the end parts of the coils having the anti-corona compensation requirement — S2

**Fig. 4**

the voltage range having the anti-corona compensation requirement is determined by difference between the rated voltage of the generator and the voltage anti-corona threshold — S11

the number N of the coils having the anti-corona compensation requirement is obtained by calculating a ratio of a voltage width to a voltage drop of a single-layer coil — S12

for each branch, N consecutive coils starting from the one of the coils of the branch that is connected to the phase leading-out wire along the first clock direction are determined as the coils of the branch having the anti-corona compensation requirement, where N is less than the total number of the coils of the branch — S13

the potting anti-corona treatment is performed on the end parts of the coils having the anti-corona compensation requirement — S2

**Fig. 5**

**Fig. 6**

the voltage range having the anti-corona compensation requirement is determined by difference between the rated voltage of the generator and the voltage anti-corona threshold — S11

the number N of the coils having the anti-corona compensation requirement is obtained by calculating a ratio of a voltage width to a voltage drop of a single-layer coil — S12

for each branch, N consecutive coils starting from the one of the coils of the branch that is connected to the phase leading-out wire along the first clock direction are determined as the coils of the branch having the anti-corona compensation requirement, where N is less than the total number of the coils of the branch — S13

for each branch, at least one of the coils starting from the one of the coils of the branch connected to the phase leading-out wire along the second clock direction is determined as the coil of the branch having the anti-corona compensation requirement, where the first clock direction is opposite to the second clock direction in the circumferential direction — S14

the potting anti-corona treatment is performed on the end parts of the coils having the anti-corona compensation requirement — S2

**Fig. 7**

## INTERNATIONAL SEARCH REPORT

| | International application No. |
|---|---|
| | **PCT/CN2023/124205** |

**A. CLASSIFICATION OF SUBJECT MATTER**

H02K3/40(2006.01)i

According to International Patent Classification (IPC) or to both national classification and IPC

**B. FIELDS SEARCHED**

Minimum documentation searched (classification system followed by classification symbols)

IPC:H02K

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 定子, 线圈, 绕组, 支路, 电晕, 端部, 灌封层, 树脂, 阈值, stator, coil, winding, branch, corona, end, encapsulation layer, resin, threshold

**C. DOCUMENTS CONSIDERED TO BE RELEVANT**

| Category* | Citation of document, with indication, where appropriate, of the relevant passages | Relevant to claim No. |
|---|---|---|
| PX | CN 116683683 A (BEIJING GOLDWIND SCIENCE & CREATION WINDPOWER EQUIPMENT CO., LTD.) 01 September 2023 (2023-09-01) description, paragraphs 4-83, and figures 1-7 | 1-20 |
| X | CN 113726037 A (DALIAN RIQIAN MOTOR CO., LTD.) 30 November 2021 (2021-11-30) description, paragraphs 10-55, and figures 1-4 | 1-3, 6, 9-17 |
| X | CN 112953050 A (WUHAN INSTITUTE OF MARINE ELECTRIC PROPULSION (CHINA SHIPBUILDING INDUSTRY CORPORATION NO.712 INSTITUTE)) 11 June 2021 (2021-06-11) description, paragraphs 6-22, and figures 1-8 | 1-3, 6, 9-17 |
| X | CN 218783645 U (WOLONG ELECTRIC NANYANG EXPLOSION PROTECTION GROUP CO., LTD. et al.) 31 March 2023 (2023-03-31) description, paragraphs 5-30, and figures 1-3 | 1-3, 6, 9-17 |
| A | CN 114865821 A (ZHEJIANG ZEEKR INTELLIGENT TECHNOLOGY CO., LTD. et al.) 05 August 2022 (2022-08-05) description, paragraphs 50-59, and figures 1-12 | 1-20 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 March 2024** | **30 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/124205** |

**C.    DOCUMENTS CONSIDERED TO BE RELEVANT**

| Category* | Citation of document, with indication, where appropriate, of the relevant passages | Relevant to claim No. |
|---|---|---|
| A | CN 110299781 A (GENERAL ELECTRIC COMPANY) 01 October 2019 (2019-10-01)<br>entire document | 1-20 |
| A | CN 219268586 U (BEIJING GOLDWIND SCIENCE & CREATION WINDPOWER<br>EQUIPMENT CO., LTD.) 27 June 2023 (2023-06-27)<br>entire document | 1-20 |
| A | EP 1903662 A1 (ABB RESEARCH LTD.) 26 March 2008 (2008-03-26)<br>entire document | 1-20 |

Form PCT/ISA/210 (second sheet) (July 2022)

**INTERNATIONAL SEARCH REPORT**
**Information on patent family members**

International application No.

**PCT/CN2023/124205**

| Patent document cited in search report | | | Publication date (day/month/year) | Patent family member(s) | | | Publication date (day/month/year) |
|---|---|---|---|---|---|---|---|
| CN | 116683683 | A | 01 September 2023 | CN | 116683683 | B | 31 October 2023 |
| CN | 113726037 | A | 30 November 2021 | CN | 113726037 | B | 01 August 2023 |
| CN | 112953050 | A | 11 June 2021 | CN | 112953050 | B | 23 August 2022 |
| CN | 218783645 | U | 31 March 2023 | None | | | |
| CN | 114865821 | A | 05 August 2022 | None | | | |
| CN | 110299781 | A | 01 October 2019 | US | 2019296599 | A1 | 26 September 2019 |
| | | | | US | 10693338 | B2 | 23 June 2020 |
| | | | | EP | 3544153 | A1 | 25 September 2019 |
| | | | | CA | 3037551 | A1 | 23 September 2019 |
| | | | | CA | 3037551 | C | 18 January 2022 |
| | | | | CN | 110299781 | B | 29 October 2021 |
| CN | 219268586 | U | 27 June 2023 | None | | | |
| EP | 1903662 | A1 | 26 March 2008 | None | | | |

Form PCT/ISA/210 (patent family annex) (July 2022)

**EP 4 753 119 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310935110